(19) Europäisches Patentamt / European Patent Office / Office européen des brevets

(11) **EP 3 472 578 B1**

(12) **EUROPÄISCHE PATENTSCHRIFT**

(45) Veröffentlichungstag und Bekanntmachung des Hinweises auf die Patenterteilung:
**13.05.2020   Patentblatt 2020/20**

(21) Anmeldenummer: **17724038.9**

(22) Anmeldetag: **17.05.2017**

(51) Int Cl.:
*G01F 23/296* (2006.01)    *G01N 11/16* (2006.01)
*G01N 29/42* (2006.01)    *G01N 9/00* (2006.01)
*G01N 29/02* (2006.01)

(86) Internationale Anmeldenummer:
**PCT/EP2017/061874**

(87) Internationale Veröffentlichungsnummer:
**WO 2017/215875 (21.12.2017 Gazette 2017/51)**

(54) **VIBRONISCHER SENSOR UND VERFAHREN ZUM BETREIBEN EINES VIBRONISCHEN SENSORS**

VIBRONIC SENSOR AND METHOD OF OPERATING A VIBRONIC SENSOR

CAPTEUR VIBRONIQUE ET PROCÉDÉ DE FONCTIONNEMENT D'UN CAPTEUR VIBRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2016   DE 102016111134**

(43) Veröffentlichungstag der Anmeldung:
**24.04.2019   Patentblatt 2019/17**

(73) Patentinhaber: **Endress+Hauser SE+Co. KG**
**79689 Maulburg (DE)**

(72) Erfinder:
• **D'ANGELICO, Sascha**
**79595 Rümmingen (DE)**
• **KUHNEN, Raphael**
**79418 Schliengen (DE)**
• **BRENGARTNER, Tobias**
**79312 Emmendingen (DE)**
• **SANDOR, Izabella**
**79650 Schopfheim (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
EP-A1- 2 151 672       DE-A1- 10 056 353
DE-A1-102005 015 547       DE-A1-102007 008 669
DE-A1-102014 118 393       US-A1- 2005 210 954

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen vibronischen Sensor zur Bestimmung und/oder Überwachung zumindest einer Prozessgröße eines Mediums sowie ein Verfahren zum Betreiben des vibronischen Sensors.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Sowohl das Anregesignal als auch das Empfangssignal sind charakterisiert durch ihre Frequenz, Amplitude und/oder Phase. Entsprechend werden Änderungen in diesen Größen üblicherweise zur Bestimmung der jeweiligen Prozessgröße herangezogen, wie beispielsweise ein vorgegebener Füllstandes eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist.

Dabei ist die Antriebs-/Empfangseinheit üblicherweise Teil eines rückgekoppelten elektrischen Schwingkreises, mittels welchem die Anregung der mechanisch schwingfähigen Einheit zu mechanischen Schwingungen erfolgt. Zur Anregung wird häufig mittels eines Regelkreises ein vorgebbarer Wert für die Phasenverschiebung, also ein Sollwert für die Phasenverschiebung zwischen dem Anregesignal und dem Empfangssignal eingestellt. Beispielsweise muss für eine resonante Schwingung der Verstärkungsfaktor $\geq 1$, und die Schwingkreisbedingung, gemäß welcher alle im Schwingkreis auftretenden Phasen ein Vielfaches von 360° ergeben, erfüllt sein. Aus dem Stand der Technik sind verschiedenste Verfahren zur Anregung der mechanisch schwingfähigen Einheit bzw. zur Einstellung einer vorgebbaren Phasenverschiebung bekannt geworden. Dabei kann grundsätzlich zwischen einer analogen und digitalen Anregung unterschieden werden, bei welcher der Schwingkreis aus analogen Komponenten, welche auf den jeweils verwendeten Typ von Sensor angepasst werden müssen, und digitalen Verfahren, welche im Prinzip universell einsetzbar sind, unterschieden werden.

Ein vielfach eingesetztes Anregungsprinzip beinhaltet, dass der Regelkreis zur Einstellung des vorgebbaren Werts für die Phasenverschiebung zwischen Anregesignal und Empfangssignal einen Verstärker und einen Phasenschieber, mittels welchem das Empfangssignal auf das Sendesignal zurückgekoppelt wird, umfasst. Gemäß der DE102006034105A1 wird beispielsweise ein einstellbarer Phasenschieber verwendet. Mittels einer Steuereinheit, welche die Frequenz des zuvor verstärkten Empfangssignals misst und mindestens ausgehend von hinterlegten Daten über die Frequenz-Phasen-Abhängigkeit einer Verstärkereinheit wird der Phasenschieber geregelt.

Aus der DE102007013557A1 ist ferner bekannt geworden, bei welchem der Verstärker einen einstellbaren Verstärkungsfaktor aufweist, welcher mittels einer Regeleinheit derart eingestellt wird, dass die Amplitude des Sendesignals im Wesentlichen innerhalb eines vorgebbaren Amplitudenbandes liegt.

Aus der DE102005015547A1 ist ein vibronischer Sensor bekannt geworden, bei welchem die Elektronikeinheit mindestens einen Allpass zur Einstellung des Sollwerts für die Phasenverschiebung vorgesehen ist. Der Allpass ändert bei konstanter Verstärkung in Abhängigkeit von der Frequenz die Phase eines elektrischen Signals. Insbesondere kann der Allpass derartig gesteuert oder geregelt werden, dass die Phase zwischen Anregesignal und Empfangssignal einstellbar ist. Vorzugsweise wird gemäß einer Ausgestaltung dieser Erfindung das Empfangssignal lediglich gefiltert und/oder verstärkt, bevor es dem Allpass zugeführt, von diesem verarbeitet und rückgeführt wird.

Bei einer analogen Anregung müssen jedoch zwangsläufig die verwendeten analogen Komponenten, aus welchen der Schwingkreis aufgebaut wird, auf den jeweils verwendeten Typ von Sensor angepasst werden. Weiterhin ist die Robustheit des Sensors, insbesondere in Hinblick auf Fremdvibrationen, von der Selektivität der jeweils verwendeten Filter zur Signalaufbereitung und/oder-auswertung abhängig, wobei die verwendeten Filter die Steigung des Phasengangs der Elektronikeinheit bestimmen. Umso größer die Steigung des Phasengangs, desto geringer ist der durch den Filter abzudeckende Frequenzbereich. Entsprechend kann es unter Umständen dazu kommen, dass der Sensor nicht mehr in Resonanz schwingt.

Aus der DE102009026685A1 ist ein Anregungsverfahren bekannt geworden, bei welchem die mechanisch schwingfähige Einheit wird mittels eines sogenannten Frequenzsuchlaufs innerhalb eines vorbestimmbaren Frequenzbandes im Arbeitsbereich der schwingfähige Einheit sukzessive mit aufeinanderfolgenden diskreten Anregefrequenzen zu mechanischen Schwingungen angeregt und die entsprechenden Empfangssignale werden empfangen. Dabei wird mittels des Frequenzsuchlaufs diejenige Anregefrequenz ermittelt, bei welcher die schwingfähige Einheit mit einer Schwingungsfrequenz schwingt, die einem vorgebbaren Wert für die Phasenverschiebung entspricht. Mit dieser Anregefrequenz wird die schwingfähige Einheit jeweils beaufschlagt. Eine vorteilhafte Weiterbildung dieses Verfahrens ist Gegenstand der DE102009028022A1, in welcher die Auswertung des Empfangssignals dadurch vereinfacht wird, dass das Empfangssignal phasenselektiv nur zu bestimmten Zeitpunkten abgetastet und ausgewertet wird. Ähnlich wird in der DE102010030982A1 vorgeschlagen, das Empfangssignal zu bezüglich des Sendesignals vorgegebenen diskreten Zeitpunkten abzutasten, die abgetasteten Spannungswerte des Empfangssignals jeweils mit einem Sollwert zu vergleichen, welchen das Empfangssignal zu diesem Zeitpunkt annimmt, wenn der vorgebbare Wert für die Phasenverschiebung vorliegt, und im Falle einer Abweichung eines Spannungswertes von dem Sollwert ausgehend von dem Vorzeichen der Abweichung die Frequenz des Sendesignals zu verringern oder zu erhöhen.

Bei einer Anregung mittels eines Frequenzsuchlaufs und der Auswertung der jeweiligen Phasen- und/oder Amplituden der Empfangssignale muss jedoch beachtet werden, dass eine Abhängigkeit zwischen der Durchlaufgeschwindigkeit des Frequenzsuchlaufs und der Frequenzauflösung besteht.

Eine weitere digitale Möglichkeit, für einen vibronischen Sensor die Phasenverschiebung zwischen Anregesignal und Empfangssignal auf einen vorgebbaren Wert zu regeln, ist in der DE00102010030982A1 offenbart. Das dort beschriebene Verfahren basiert auf dem Funktionsprinzip einer Phasenregelschleife (engl. Phase-Locked-Loop, PLL). Dabei wird die Frequenz des Anregesignals derart eingestellt, dass ein vorgebbarer Wert für die Phasenverschiebung zwischen dem Anregesignal und dem Empfangssignal besteht.

Diese Art der Anregung weist gegenüber der Anregung mittels eines Frequenzsuchlaufs entscheidende Vorteile in Bezug auf die Auswertegeschwindigkeit auf. Allerdings wird jedoch zumindest ein Phasendetektor benötigt, welcher Einfluss auf die Robustheit, damit ist insbesondere unter anderem die Stabilität der Regelung beim Auftreten von Fremdvibrationen gemeint, wie auch auf die Genauigkeit des Regelkreises nimmt. Damit die Auswertung stabil erfolgen kann, muss ferner gewährleistet sein, dass die Amplitude des Anregesignals auf einen konstanten Wert gehalten wird.

Aus der US20050210954A1 ist ein Verfahren zur Durchführung von Funktionstests eines vibronischen Sensors bekannt geworden. Der Sensor wird zu mechanischen Schwingungen angeregt, während zumindest ein Schwingungsparameter verändert wird. Die jeweiligen Empfangssignale werden mit solchen Referenzdaten verglichen, die einem fehlerfrei arbeitenden Sensor entsprechen und anhand des Vergleichs kann eine Aussage über den Sensor getroffen werden.

Aus der DE102014118393A1 wiederum ist ein vibronischer Sensor bekannt geworden, bei welchem über eine einstellbare Kapazität die Lage der Antiresonanzfrequenz der schwingfähigen Einheit eingestellt werden kann. Auf diese Weise kann die elektrische Kopplung innerhalb der Elektronikeinheit beeinflusst werden.

Um Probleme beim Betreiben eines vibronischen Sensors beim Auftreten von Fremdvibrationen, wie beispielsweise Vibrationen von Pumpen oder auch Ultraschallbädern, zu reduzieren, schlägt die DE102012101667A1 vor, eine Regel-/Auswerteeinheit dazu zu konfigurieren, beim Vorliegen von zumindest einer Fremdvibration in Abhängigkeit der Frequenz und/oder der Amplitude der Fremdvibration die Schwingungsanregung derart zu steuern, dass das Empfangssignal von der Fremdvibration im Wesentlichen ungestört ist und/oder mindestens eine Frequenz einer Fremdvibration zu unterdrücken.

Um unabhängig von Störeinflüssen arbeiten zu können, ist in der bisher unveröffentlichten deutschen Patentanmeldung mit dem Aktenzeichen DE102014119061A1 ist ein vibronischer Sensor mit einer Elektronikeinheit bekannt geworden, welche ein adaptives Filter umfasst. Im laufenden Betrieb des vibronischen Sensors wird die Filtercharakteristik so eingestellt, dass eine Sollphasenverschiebung zwischen dem Anregesignal und dem Empfangssignal auftritt. Auf diese Anmeldung wird im Folgenden vollumfänglich Bezug genommen.

DE 10 2007 008669 A1 offenbart einen vibronischen Sensor mit einer Phaseneinstelleinheit, die es erlaubt, durch Messung einer Phasendifferenz zwischen Anrege- und Empfangssignal eine vorgebbare Phasenverschiebung zwischen Anrege- und Empfangssignal einzustellen.

EP 2 151 672 A1 offenbart einen vibronischen Sensor, bei dem während einer Anregungspause ein gemessenes Empfangssignal zur Bestimmung der Eigenfrequenz verwendet wird. Die Eigenfrequenz umfasst dann nur noch Schwingungsanteile der Eigenfrequenz, da sie nicht durch ein aktives Übertragungssignal gestört wird.

DE 100 56 353 A1 offenbart einen Schwinggabelfüllstandsensor mit einem Eingangsverstärker, welcher mit seinem Ausgang ein Bandfilter ansteuert. Das Bandfilter sorgt dafür, dass die Schwinggabel nur in ihrem Grundschwingungsmode erregt wird. Oberwellenschwingungen werden vom Bandfilter unterdrückt.

Ausgehend vom genannten Stand der Technik liegt der vorliegenden Erfindung die Aufgabe zugrunde, einen vibronischen Sensor sowie ein Verfahren zum Betreiben des Sensors bereitzustellen, der/das sich durch ein hohes Maß an Zuverlässigkeit auszeichnet.

Diese Aufgabe wird erfindungsgemäß gelöst durch einen Vibronischer Sensor zur Bestimmung und/oder Überwachung zumindest einer Prozessgröße eines Mediums in einem Behältnis zumindest umfassend

- eine mechanisch schwingfähige Einheit,
- eine Antriebs-/Empfangseinheit und
- eine Elektronikeinheit mit zumindest einem adaptiven Filter,

wobei die Elektronikeinheit dazu ausgestaltet ist, abwechselnd einen ersten und einen zweiten Betriebsmodus auszuführen,
wobei die Antriebs-/Empfangseinheit dazu ausgestaltet ist, während des ersten Betriebsmodus die mechanisch schwingfähige Einheit mittels eines elektrischen Anregesignals zu mechanischen Schwingungen anzuregen,
wobei die Elektronikeinheit dazu ausgestaltet ist, während des zweiten Betriebsmodus

- die Anregung der mechanisch schwingfähigen Einheit mittels des Anregesignals zu unterbrechen,
- die mechanischen Schwingungen der mechanisch schwingfähigen Einheit zu empfangen und in ein elektrisches Empfangssignal umzuwandeln
- zumindest einen Wert einer Filtercharakteristik des adaptiven Filters derart einzustellen, dass eine vorgebbare Phasenverschiebung zwischen dem Anregesignal und dem Empfangssignal vorliegt,
- das Empfangssignal ($U_E$) auszuwerten, und
- aus dem Empfangssignal die zumindest eine Prozessgröße zu bestimmen.

Erfindungsgemäß bleibt die Filtercharakteristik des adaptiven Filters während des ersten Betriebsmodus konstant. Indem die Filtercharakteristik passend eingestellt wird, ergibt sich eine bestimmte, gewünschte vorgebbare Phasenverschiebung, bzw. ein gewünschter Wert für die Phasenverschiebung, zwischen dem Anregesignal und dem Empfangssignal.

Die Filtercharakteristik eines Filters beschreibt ganz allgemein das Verhalten des Filters, also dessen Filtereigenschaften, und ist durch die sogenannten Filteranforderungen, wie solche für den Durchlass-, und Sperrbereich, bestimmt. Gegebenenfalls beinhalten die Filteranforderungen ebenfalls Vorgaben bezüglich der Gruppenlaufzeit, des maximalen Überschwingens, der Flankensteilheit, der Mittenfrequenz, der Güte usw. Beispielsweise kann eine der bekannten Filtercharakteristiken Bessel, Legendre, Butterworth, Tschebyscheff, Gauss oder usw. verwendet werden. Je nach gewählter Filtercharakteristik wird für das Filter die Übertragungsfunktion, mittels welcher der Amplituden- und Phasenverlauf, sowie der Frequenzgang vollständig bestimmt sind, passend konzipiert.

Die Filtercharakteristik eines adaptiven Filters ist im Betrieb einstellbar. So können beispielsweise die Güte des Filters, welche mit der Bandbreite korreliert, sowie die Lage der Mittenfrequenz eingestellt werden. Entsprechend kann durch die Einstellung einer geeigneten Filtercharakteristik die Phasenverschiebung $\Phi_{Filter}$ zwischen dem Eingangs- und Ausgangssignal des Filters passend eingestellt werden. Als Konsequenz der Einstellung der Phasenverschiebung zwischen dem Eingangssignal und dem Ausgangssignal des Filters auf einen vorgebbaren Wert, stellt sich die Frequenz des Anregesignals derart ein, dass zwischen dem Anregesignal und Empfangssignal eine vorgebbare Phasenverschiebung von $\Phi_{soll}$ =360°-$\Phi_{Filter}$ auftritt. Da es sich um ein adaptives, also mitführbares Filter, handelt, kann die Güte des Filters erhöht werden, ohne den jeweiligen Frequenzbereich einzuschränken, wie es für ein festes Filter der Fall wäre. Die Einstellung der vorgebbaren Phasenverschiebung über das Filter ist vorteilhaft weitgehend unabhängig von auftretenden Störeinflüssen, wie beispielsweise Fremdvibrationen, so dass der erfindungsgemäße vibronische Sensor besonders robust arbeitet.

Durch das adaptive Filter ist ein erfindungsgemäßes Feldgerät für eine Vielzahl von Anwendungen einsetzbar. Beispielsweise kann das Feldgerät bei unterschiedlichen Phaseneinstellgenauigkeiten und damit einhergehend Arbeitsgeschwindigkeiten betrieben werden. Auch das Einstellen unterschiedlicher Werte für die vorgebbare Phasenverschiebung ist einfach realisierbar, und kann vorteilhaft auf Softwareebene erfolgen. Damit kann ein und dieselbe Elektronikeinheit und Anordnung für unterschiedliche vorgebbare Phasenverschiebungen verwendet werden. Die erfindungsgemäße Lösung lässt sich ferner vorteilhaft sowohl für digitale als auch für analoge Ausführungen des jeweiligen Schwingkreises zur Anregung der schwingfähigen Einheit anwenden und ist einfach auf unterschiedliche Sensoren, insbesondere unterschiedliche schwingfähige Einheiten anpassbar.

Erfindungsgemäß wird der vibronische Sensor abwechselnd in einem ersten und einem zweiten Betriebsmodus betrieben. Während des ersten Betriebsmodus, im Folgenden auch als Anrege-Sequenz bezeichnet, wird die mechanisch schwingfähige Einheit mittels der Antriebs-/Empfangseinheit zu mechanischen Schwingungen angeregt. Während des zweiten Betriebsmodus, auch als Mess-/Regel-Sequenz bezeichnet, wird die Anregung der schwingfähigen Einheit unterbrochen. Die Anrege-/Empfangseinheit wird also während des zweiten Betriebsmodus nicht mit dem elektrischen Anregesignal beaufschlagt. Während des zweiten Betriebsmodus schwingt die schwingfähige Einheit mit ihrer Eigenfrequenz in Form einer gedämpften Schwingung weiter. Die Schwingungen werden in ein elektrisches Empfangssignal umgewandelt, aus welchem wiederum die zumindest eine Prozessgröße bestimmt und die aktuelle Phasenverschiebung zwischen dem Anregesignal und dem Empfangssignal durch passende Einstellung, zumindest der Filtercharakteristik, auf einen vorgebbaren Wert, bzw. eine vorgebbare Phasenverschiebung, geregelt wird. Das Anregesignal wird also ausgehend vom Empfangssignal erzeugt.

Ein entscheidender Vorteil in Zusammenhang mit dem erfindungsgemäßen Vorgehen, wonach zwei Betriebsmodi abwechselnd ausgeführt werden, liegt darin, dass die Detektion der mechanischen Schwingungen in Form des Empfangssignals und dessen Auswertung unabhängig vom Anregesignal erfolgen können. Dies ist insbesondere von Vorteil, wenn, beispielsweise konstruktionsbedingt, Kopplungen zwischen dem Anregesignal und dem Empfangssignal auftreten können. Dies ist beispielsweise dann der Fall, wenn eine Überlagerung des Anregesignals und Empfangssignals stattfindet.

Gemäß einer bevorzugten Ausgestaltung handelt es sich bei dem Anregesignal um ein Rechtecksignal. Es sei darauf verwiesen, dass aber auch andere dem Fachmann bekannte Signalformen für das Anregesignal, wie Dreiecksignale, Sinussignale, etc. möglich sind und unter die vorliegende Erfindung fallen.

Eine weitere bevorzugte Ausgestaltung beinhaltet, dass die Elektronikeinheit zumindest ein Schaltelement zum Hin- und Herschalten zwischen dem ersten und zweiten Betriebsmodus umfasst. Mittels des Schaltelements kann beispielsweise die Antriebs-/Empfangseinheit von der Elektronikeinheit getrennt werden.

In einer besonders bevorzugten Ausgestaltung ist die Elektronikeinheit dazu ausgestaltet, die vorgebbare Phasenverschiebung durch Einstellung der Mittenfrequenz des adaptiven Filters einzustellen. Die Mittenfrequenz wird also derart variiert, dass zwischen dem Anregesignal und dem Empfangssignal eine bestimmte, vorgebbare Phasenverschiebung vorliegt.

In einer weiteren besonders bevorzugten Ausgestaltung umfasst die Elektronikeinheit eine Phasenregeleinheit, insbesondere eine auf dem Prinzip eines Lock-In Verstärkers basierende Phasenregeleinheit, welche die Mittenfrequenz des adaptiven Filters derart regelt, dass für die Phasenverschiebung zwischen einem Eingangssignal und einem Ausgangssignal des Filters ein vorgebbarer Wert vorliegt. Die Einstellung der vorgebbaren Phasenverschiebung zwischen dem Anregesignal und dem Empfangssignal erfolgt also mittels einer Regelung der Phasenverschiebung zwischen dem Eingangssignal und Ausgangssignal des adaptiven Filters. Bei einem Lock-In Verstärker handelt es sich insbesondere im Prinzip um einen extrem schmalbandigen Bandpassfilter. Entsprechend erlaubt dieses Vorgehen eine Regelung mit besonders gutem Signalzu-Rausch-Verhältnis.

Alternativ beinhaltet eine weitere Ausgestaltung, dass die Elektronikeinheit einen Ringspeicher und/oder einen Phasenschieber umfasst, mittels welchem die vorgebbare Phasenverschiebung einstellbar ist. Die Einstellung eines vorgebbaren Werts für die Phasenverschiebung zwischen einem Anregesignal und einem Empfangssignal eines vibronischen Sensors mittels eines Ringspeichers und/oder Phasenschiebers ist grundsätzlich beispielsweise in den Dokumenten DE10161071A1 und DE10161072A1 beschrieben. Bezogen auf die vorliegende Erfindung können beispielsweise diskrete Werte des Empfangssignals in einem Speicherelement gespeichert und dann mit einer einstellbaren zeitlichen Verzögerung an das adaptiven Filter übergeben werden. Dann resultiert die vorgebbare Phasenverschiebung zwischen dem Anregesignal und dem Empfangssignal aus zwei Maßnahmen: aus der mittels der Filtercharakteristik eingestellten Phasenverschiebung zwischen dem Eingangssignal und Ausgangssignal des adaptiven Filters, sowie aus der mittels des Ringspeichers und/oder Phasenschiebers erzeugten Phasenverschiebung $\Phi_{rs}$. Damit ergibt sich die vorgebbare Phasenverschiebung $\Phi_{soll}$ zu $\Phi_{soll}=360°- \Phi_{filter} - \Phi_{rs}$ Vorteilhaft kann durch dieses Vorgehen das adaptive Filter unabhängig von dem Wert der vorgebbaren Phasenverschiebung auf seine Mittenfrequenz eingestellt werden. Diese Einstellung entspricht einer Phasenverschiebung zwischen dem Eingangssignal und dem Ausgangssignal des Filters von 0° oder 90°. Wird ein anderer Wert für die vorgebbare Phasenverschiebung zwischen Anregesignal und Empfangssignal gefordert, welche nicht einem Wert von $\Phi_{soll}=360°- \Phi_{filter}$ entspricht, so muss zusätzlich mittels des Ringspeichers und/oder Phasenreglers eine geeignete zusätzliche Phasenverschiebung eingestellt werden, so dass sich die geforderte vorgebbare Phasenverschiebung $\Phi_{soll}=360°- \Phi_{filter} - \Phi_{rs}$ einstellt.

Durch Einstellung der vorgebbaren Phasenverschiebung führt die schwingfähige Einheit mechanische Schwingungen mit der jeweils korrespondierenden Frequenz aus. Bevorzugt führt die schwingfähige Einheit im eingeregelten Zustand resonante Schwingungen in der Grundschwingungsmode aus. Vorteilhaft ist durch Einstellung der Mittenfrequenz auf die Frequenz des Anregesignals die Schwingfrequenz der mechanisch schwingfähigen Einheit bekannt. Diese wird also während der Anregung direkt mit detektiert, was eine Vereinfachung bezüglich der Signalauswertung innerhalb der Elektronikeinheit mit sich bringt.

In einer bevorzugten Ausgestaltung ist/sind die Bandbreite und/oder die Güte des adaptiven Filters einstellbar. Die Güte hängt dabei über die Frequenz mit der Bandbreite zusammen.

Eine hohe Bandbreite ermöglicht es, die Resonanzfrequenz der schwingfähigen Einheit einfach und schnell aufzufinden, da auf diese Weise die schwingfähige Einheit mit Frequenzen innerhalb eines großen Frequenzspektrums angeregt wird. Vorteilhaft kann die Schwingkreisbedingung also auch innerhalb eines breiten Frequenzbandes erfüllt werden. Wird allerdings innerhalb eines maximalen, durchfahrbaren Frequenzintervalls keine Resonanz detektiert, kann beispielsweise eine Blockade an und/oder ein Defekt der mechanisch schwingfähigen Einheit vorliegen.

Im Falle einer digitalen, vom Grund her auf dem Prinzip einer Phasenregelschleife basierenden, Anregung wird dagegen direkt die Phasenverschiebung zwischen dem Anregesignal und Empfangssignal geregelt, was einen eingeregelten Zustand des Schwingsystems erforderlich macht.

Die Resonanzfrequenz muss also im Wesentlichen bekannt sein. Da sich jedoch die Güte des Schwingsystems im Betrieb fortlaufend ändern kann, sind die Suche und Regelung der Resonanzfrequenz bei Verwendung einer Phasenregelschleife deutlich komplizierter als für den Fall, welchen die vorliegende Anmeldung beschreibt. Für die vorliegende Erfindung wird nämlich beispielsweise die Mittenfrequenz des digitalen Filters geregelt, dessen Güte konstant ist. Weiterhin kann aufgrund durch die Einstellung der vorgebbaren Phasenverschiebung durch Regelung der Phasenverschiebung zwischen dem Eingangssignal und Ausgangssignal des adaptiven Filters vom Einsatz zumindest eines spannungsgesteuerten Oszillators (VCO) abgesehen werden.

Für eine genaue Messung ist es wiederum zweckdienlich, eine möglichst kleine Bandbreite zu wählen, um die Messgenauigkeit, so weit möglich, zu maximieren. Eine kleine Bandbreite bewirkt vorteilhaft eine deutliche Reduzierung von Störeinflüssen.

In einer bevorzugten Ausgestaltung handelt es sich bei dem adaptiven Filter um einen Resonatorfilter. In einer alternativen bevorzugten Ausgestaltung handelt es sich bei dem adaptiven Filter um einen Bandpassfilter, insbesondere um einen Tiefpassfilter, insbesondere um einen Tiefpassfilter 2. Ordnung. Wird beispielsweise die Mittenfrequenz des adaptiven Filters auf die Eingangsfrequenz, also auf die Frequenz des Empfangssignals von der schwingfähigen Einheit geregelt, so ergibt sich bei der Verwendung eines Bandpassfilters eine Phasenverschiebung $\Phi_{filter}$ zwischen Eingangs- und Ausgangssignal von 0°. Bei einem Tiefpassfilter 2. Ordnung, insbesondere mit Resonanzerhöhung, also einem Resonatorfilter, ergibt sich dagegen eine Phasenverschiebung von -90°. Abhängig von der Ausgestaltung der Sensoreinheit ergibt sich dann ein anderer Wert für die zu einer resonanten Anregung führende vorgebbare Phasenverschiebung zwischen Anregesignal und Empfangssignal.

Eine Ausgestaltung sieht vor, dass die vorgebbare Phasenverschiebung +/-90°, +/-45°, oder 0° beträgt. Während eine vorgebbare Phasenverschiebung von 90° oder 0° abhängig von der Ausgestaltung der Sensoreinheit, insbesondere der Antriebs-/Empfangseinheit, zu einer resonanten Anregung der schwingfähigen Einheit führt, ist eine vorgebbare Phasenverschiebung von +/-45° ggf. für die Bestimmung der Dichte oder Viskosität zu bevorzugen.

Eine weitere Ausgestaltung beinhaltet, dass die Elektronikeinheit eine Amplitudenregeleinheit zur Regelung der Amplitude des Anregesignals auf einen vorgebbaren Wert oder auf einen Wert innerhalb eines vorgebbaren Intervalls umfasst. Mit einer Amplitudenregeleinheit kann vorteilhaft die Amplitudendynamik kontrolliert werden. Damit kann unter anderem der Dämpfung der Schwingungsamplitude der schwingfähigen Einheit beim Eintauchen in unterschiedliche Medien Rechnung getragen werden. Die schwingfähige Einheit wird also jeweils mit einem Signal passender Amplitude beaufschlagt, welches derart gewählt wird, dass die Amplitude des Empfangssignals innerhalb eines bestimmten wählbaren Intervalls liegt. Eine Regelung der Amplitude ist entsprechend insbesondere in einem eingeregelten Zustand des Sensors von Vorteil

Es ist außerdem von Vorteil, wenn die Elektronikeinheit dazu ausgestaltet ist, einen Frequenz-Suchlauf auszuführen, im Falle des Unterschreitens eines vorgebbaren Schwellwerts für die Amplitude die schwingfähige Einheit mittels des Frequenz-Suchlaufs anzuregen, und die Mittenfrequenz des adaptiven Filters sukzessive auf innerhalb eines vorgebbaren Frequenzintervalls aufeinander folgende diskrete Anregefrequenzen einzustellen. Beispielsweise kann im Betrieb, sobald der vorgebbare Schwellenwert für die Amplitude bei der Resonanzfrequenz unterschritten wird, von der Phasenregelung auf eine Steuerung des Sensors mit einer Anregung mittels eines Frequenz-Suchlaufs gewechselt werden. Dazu wird die Mittenfrequenz des adaptiven Filters auf diskrete aufeinanderfolgende Frequenzen innerhalb eines vorgebbaren Frequenzbandes eingestellt. Sobald der Schwellenwert für die Amplitude wieder überschritten wird (also beispielsweise die schwingfähige Einheit wieder frei schwingt), kann in den ursprünglichen Modus, in welchem die Anregung mittels einer vorgebbaren Phasenverschiebung erfolgt, umgestellt werden.

Gemäß einer Ausgestaltung ist die Elektronikeinheit dazu ausgestaltet, zumindest einen Wert und/oder Parameter zumindest einer der der Elektronikeinheit zugeordneten Komponenten, insbesondere einen Wert und/oder Parameter der Filtercharakteristik, der Phasenregeleinheit oder der Amplitudenregeleinheit während der Ausführung des ersten Betriebsmodus zu speichern und/oder hinterlegen. Während des ersten Betriebsmodus findet also keine aktive Auswertung des Empfangssignals statt, da dieses mit dem Anregesignal koppelt. Entsprechend findet auch keine Regelung der aktuellen Phasenverschiebung auf die vorgebbare Phasenverschiebung zwischen dem Anregesignal und Empfangssignal fest. Die Werte und/oder Parameter der einzelnen Komponenten der Elektronikeinheit werden während der Dauer des ersten Betriebsmodus also quasi eingefroren.

In dieser Hinsicht ist es von Vorteil, wenn die Elektronikeinheit ferner dazu ausgestaltet ist, zu Beginn der Ausführung des zweiten Betriebsmodus für die zumindest eine Komponente den zumindest einen hinterlegten und/oder gespeicherten Parameter und/oder Wert einzustellen. Der zweite Betriebsmodus wird also jeweils mit den zuletzt während des vorangegangenen zweiten Betriebsmodus gespeicherten und/oder hinterlegten Werten und/oder Parametern gestartet.

Es ist von Vorteil, wenn es sich bei der Prozessgröße um einen vorgegebenen Füllstand, die Dichte und/oder die Viskosität des Mediums in dem Behälter handelt.

Ebenso ist es von Vorteil, wenn die schwingfähige Einheit eine Membran, ein Einstab oder eine Schwinggabel ist.

Ferner ist es von Vorteil, wenn es sich bei der Antriebs-/Empfangseinheit um eine elektromagnetische oder um eine piezoelektrische, insbesondere eine ein einziges piezoelektrisches Element umfassende, Antriebs-/Empfangseinheit handelt. Insbesondere bei elektromagnetischen Antriebs-/Empfangseinheiten mit zumindest einer Spule kommt es aufgrund der sich ausbildenden Magnetfelder zu Kopplungen zwischen dem Anregesignal und Empfangssignal, so dass eine Signalauswertung vergleichsweise kompliziert oder sogar unmöglich werden kann. Das gleiche gilt je nach angewendetem Auswerteverfahren auch für elektromechanische Wandlereinheiten, welche ein einziges piezoelektrisches Element als Antriebs- und Empfangseinheit aufweisen. Bei den letztgenannten Antriebs-/Empfangseinheiten bildet sich die Kopplung insbesondere dann aus wenn die Signalauswertung anhand einer elektrischen Spannung erfolgt.

Die der Erfindung zugrunde liegende Aufgabe wird ferner gelöst durch ein Verfahren zum Betreiben eines vibronischen Sensors zur Bestimmung und/oder Überwachung zumindest einer Prozessgröße eines Mediums in einem Behälter, insbesondere gemäß zumindest einem der vorhergehenden Ansprüche,

wobei abwechselnd ein erster und ein zweiter Betriebsmodus ausgeführt werden,

wobei während des ersten Betriebsmodus die mechanisch schwingfähige Einheit mittels eines elektrischen Anregesignals zu mechanischen Schwingungen angeregt wird,

wobei während des zweiten Betriebsmodus

- die Anregung der mechanisch schwingfähigen Einheit mittels des Anregesignals unterbrochen wird,
- die mechanischen Schwingungen der mechanisch schwingfähigen Einheit empfangen und in ein elektrisches Empfangssignal umgewandelt werden
- zumindest ein Wert einer Filtercharakteristik des adaptiven Filters derart eingestellt wird, dass eine vorgebbare Phasenverschiebung zwischen dem Anregesignal und dem Empfangssignal vorliegt,
- das Empfangssignal ($U_E$) ausgewertet wird,
- aus dem Empfangssignal die zumindest eine Prozessgröße bestimmt wird, und

- wobei die Filtercharakteristik des adaptiven Filters während des ersten Betriebsmodus konstant bleibt.

Auch das erfindungsgemäße Verfahren ist sowohl für digitale als auch für analoge Ausführungen des jeweiligen Schwingkreises zur Anregung der schwingfähigen Einheit anwendbar. Ebenso können mittels des erfindungsgemäßen Verfahrens abhängig von der Anwendung unterschiedliche Phaseneinstellgenauigkeiten realisiert, sowie je nach Anwendung unterschiedliche vorgebbare Phasenverschiebungen eingestellt werden.

Die in Zusammenhang mit dem erfindungsgemäßen vibronischen Sensor beschriebenen Ausgestaltungen sind mutatis mutandis auch auf das erfindungsgemäße Verfahren anwendbar.

Die Erfindung sowie ihre vorteilhaften Ausgestaltungen werden nachfolgend anhand der Figuren Fig. 1 - Fig. 3 näher beschrieben. Es zeigt:

Fig. 1: eine schematische Skizze eines vibronischen Sensors gemäß Stand der Technik,

Fig. 2: ein Blockschaltbild einer erfindungsgemäßen Elektronikeinheit, und

Fig. 3: eine weitere Ausgestaltung einer erfindungsgemäßen Elektronikeinheit zur Illustration des (a) ersten und (b) zweiten Betriebsmodus.

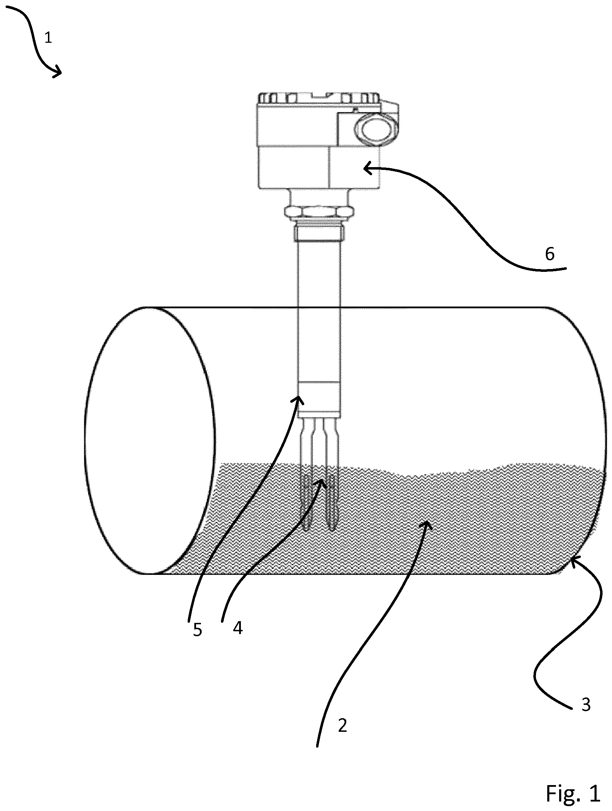

In Fig. 1 ist ein vibronischer Sensor 1 gezeigt. Dargestellt ist eine schwingfähige Einheit 4 in Form einer Schwinggabel, welche teilweise in ein Medium 2 eintaucht, welches sich in einem Behälter 3 befindet. Die schwingfähige Einheit wird mittels der Anrege-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder -speisung erfolgt.

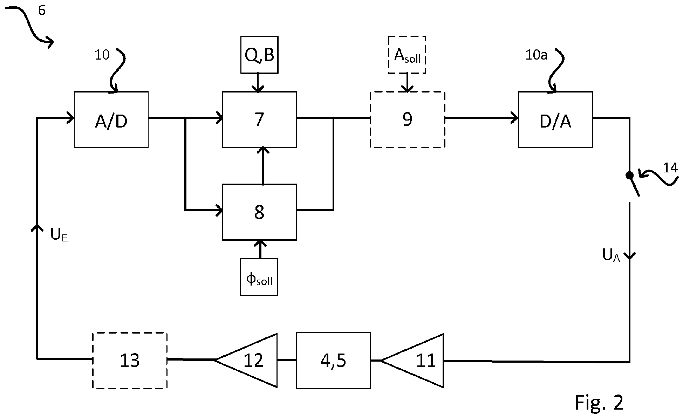

Ein Blockschaltbild einer erfindungsgemäßen Elektronikeinheit ist Gegenstand von Fig. 2. Das Empfangssignal $U_E$ durchläuft zuerst einen Analog-Digital Wandler 10, bevor es dem adaptiven Filter 7 zugeführt wird. Die Filtercharakteristik des adaptiven Filters wird so eingestellt, dass eine geeignete Phasenverschiebung $\Phi_{filter}$ zwischen dem Eingangssignal und dem Ausgangssignal des adaptiven Filters vorliegt. Dadurch ergibt sich eine vorgebbare Phasenverschiebung $\Phi_{soll}=360°-\Phi_{Filter}$ zwischen dem Anregesignal und dem Empfangssignal. Die vorgebbare Phasenverschiebung wird also durch eine geeignete Einstellung der Filtercharakteristik eingestellt. Beispielsweise kann hierfür eine Phasenregeleinheit 8 verwendet werden, mittels welcher die Mittenfrequenz $f_m$ des adaptiven Filters derart geregelt wird, dass zwischen Anregesignal und Empfangssignal die vorgeb-

bare Phasenverschiebung $\Phi_{soll}$ vorliegt. Die Phasenregeleinheit 8 wiederum kann beispielsweise auf dem Prinzip eines Lock-In-Verstärkers basieren.

Die Güte Q des adaptiven Filters 7 lässt sich unter anderem durch Variation des sogenannten Lehr'schen Dämpfungsmaßes D einstellen. Dabei wird folgender Zusammenhang ausgenutzt: $Q = \frac{1}{2D}$, wobei das Lehr'sche Dämpfungsmaß sich wiederum aus den mechanischen Eigenschaften der schwingfähigen Einheit bestimmt.

Die Güte Q des adaptiven Filters 7 hängt darüber hinaus über die Beziehung $B = \frac{f_m}{Q}$ mit der Güte Q und der Mittenfrequenz des adaptiven Filters $f_m$ zusammen. Eine Ausgestaltung der Erfindung beinhaltet, dass die Güte Q des adaptiven Filters 7 bzw. dessen Bandbreite B einstellbar ist.

Das Empfangssignal $U_E$ ist charakterisiert durch seine Frequenz, seine Amplitude und seine Phase. Erfolgt die Phasenregelung der Phasenregeleinheit 8 durch Einstellung der Mittenfrequenz $f_m$ des adaptiven Filters 7 auf die Eingangsfrequenz des adaptiven Filters, so ist zu jedem Zeitpunkt die Frequenz, mit welcher die schwingfähige Einheit 4 schwingt, bekannt.

Weiterhin kann optional eine, hier durch gestrichelte Linien angedeutete, Amplitudenregeleinheit 9 innerhalb der Elektronikeinheit 6 integriert sein. Mittels der Amplitudenregeleinheit 9 wird die Amplitude A des Anregesignals $U_A$ auf einen vorgebbaren Wert oder auf einen Wert innerhalb eines vorgebbaren Intervalls umfasst. Beispielsweise kann hierfür ein handelsüblicher PI-Regler eingesetzt werden.

Mit der Verwendung eines adaptiven Filters 7 zur Anregung der mechanisch schwingfähigen Einheit 7 werden vorteilhaft keine weiteren Filter zur Signalfilterung vor der Auswertung benötigt.

Bevor das Anregesignal $U_A$ über die Ausgangsstufe 11 der Elektronikeinheit an die Sensoreinheit 4,5 übermittelt wird, durchläuft es einen Digital-Analog-Wandler 10a. Optional kann das von der Sensoreinheit 4,5 empfangene Empfangssignal $U_E$, bevor es nach Durchlaufen der Eingangsstufe 12 an den Analog-Digital-Wandler 10 weitergeleitet wird, außerdem durch einen Antialiasing-Filter 13, angedeutet in gestrichelten Linien, geführt werden.

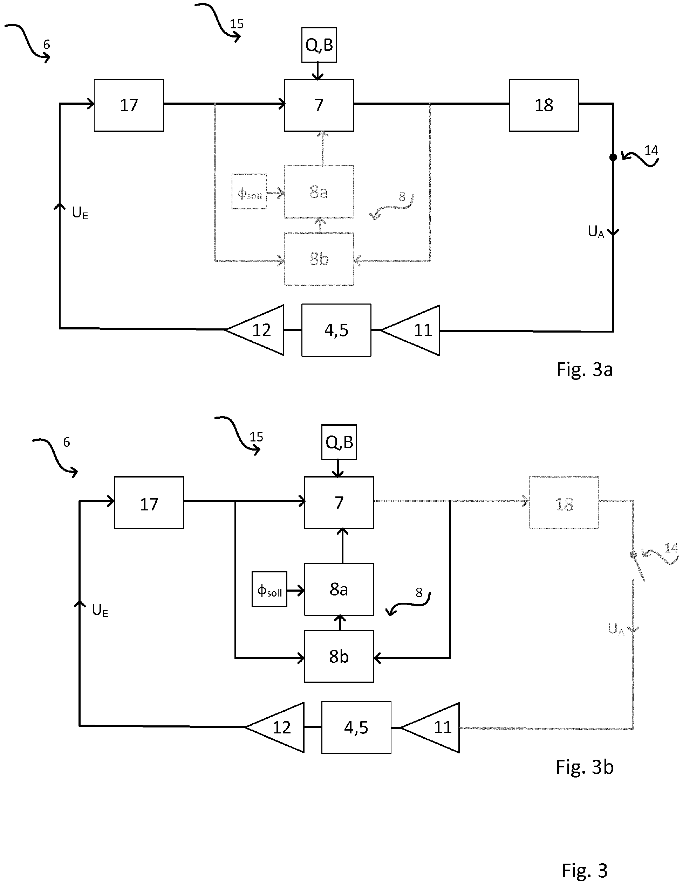

Zur Durchführung der zwei Betriebsmodi 15,16 umfasst die Elektronikeinheit ferner ein Schaltelement 14. Die Vorgänge während der beiden Betriebsmodi 15,16 werden im Folgenden anhand von Fig. 3, welche eine weitere Ausgestaltung einer erfindungsgemäßen Elektronikeinheit 6 zeigt, erläutert. Für dieses Beispiel ist die Antriebs-/Empfangseinheit 5 eine elektromagnetische Antriebs-/Empfangseinheit. Dies ist allerdings nicht zwingend notwendig.

In Fig. 3a ist zuerst der erste Betriebsmodus 15, auch als Anrege-Sequenz bezeichnet, illustriert. Die schwingfähige Einheit 4 wird mit einem Anregesignal $U_A$, in Form eines Rechtecksignals, beaufschlagt und zu mechanischen Schwingungen angeregt. Die schwingfähige Einheit 4 speichert auf diese Weise also Schwingungsenergie. Das von der schwingfähigen Einheit 4 kommende Empfangssignal $U_E$ ist dem Anregesignal $U_A$ überlagert. Das Empfangssignal $U_E$ durchläuft den Strom-Spannungswandler 17, das adaptive Filter 7 und den Spannungs-Stromwandler 18. Während der Anrege-Sequenz 15 findet keine aktive Messung der aktuell vorliegenden Phasenverschiebung $\Phi$ zwischen dem Anregesignal $U_A$ und Empfangssignal $U_E$ statt. Auch wird keine aktive Regelung zumindest eines Wertes der Filtercharakteristik des adaptiven Filters 7 durchgeführt. Die Komponenten der Elektronikeinheit 6, welche der Regelung und/oder Phasenmessung dienen, wie beispielsweise das adaptive Filter 7, oder auch die Regeleinheit 8a und Detektionseinheit 8b, auch als Messeinheit bezeichnet, der Phasenregeleinheit 8 befinden sich in einem sogenannten Hold-Modus, d.h. ihr Betrieb wird pausiert, oder deaktiviert. Die Filtercharakteristik des adaptiven Filters 7 bleibt konstant. Die letzten während des zweiten Betriebsmodus 16 eingestellten internen Parameter und/oder Werte dieser Komponenten 8a,8b,7 werden hinterlegt/gespeichert und dienen als Initialwerte für den darauf folgend ausgeführten zweiten Betriebsmodus 16. Diese können entweder innerhalb der Komponenten 8a,8b,7 oder in einer der Elektronikeinheit 6 zugeordneten Speichereinheit [nicht gezeigt] hinterlegt/gespeichert werden.

Während des zweiten Betriebsmodus 16, auch als Mess-/Regel-Sequenz bezeichnet, wird mittels des Schaltelements 14 die Beaufschlagung Sensoreinheit 4,5 mittels des Anregesignals $U_A$ unterbrochen, wie in Fig. 3b gezeigt ist. Die schwingfähige Einheit 4 schwingt nun mit ihrer Eigenresonanzfrequenz $f_0$ und führt entsprechend eine gedämpfte Resonanzschwingung aus. Das Anregesignal $U_A$ ist nun dem Empfangssignal $U_E$ nicht mehr überlagert, so dass eine Signalauswertung in der Elektronikeinheit 6 erfolgen kann. Die Regelung der aktuellen Phasenverschiebung $\Phi$ zwischen Anregesignal $U_A$ und Empfangssignal $U_E$ wird fortgesetzt. Im Falle einer elektromagnetischen Antriebs-/Empfangseinheit 5 wird beispielsweise eine vorgebbare Phasenverschiebung $\Delta\Phi_{soll}$ von 0° angestrebt. Beispielsweise kann zur Regelung der aktuellen Phasenverschiebung $\Phi$ die Mittenfrequenz $f_m$ des adaptiven Filters 7 passend eingestellt werden. Während der aufeinanderfolgenden Mess-/Regel-Sequenzen 16 werden die internen Parameter und/oder Werte der für die Regelung und Phasenmessung eingesetzten Komponenten 8a,8b,7 der Elektronikeinheit 6 also sukzessive geändert, bis eine resonante Anregung der Sensoreinheit 4,5 erfolgt. Im eingeregelten Zustand des vibronischen Sensors 1 besteht dann Phasengleichheit zwischen dem zwischen Anregesignal $U_A$ und Empfangssignal $U_E$ und die Mittenfrequenz $f_m$ des Filters 7 ist auf den Wert der Resonanzfrequenz $f_0$ der schwingfähigen Einheit 4 eingestellt. In jeder Mess-Regel-Sequenz 6 wird also beispielsweise der Abstand der Mittenfrequenz $f_m$ und Resonanzfrequenz $f_0$ reduziert.

Die Zeitdauer für den ersten 15 bzw. zweiten 16 Betriebsmodus ist wählbar und kann auf eine bestimmte Sensoreinheit und die angedachte Applikation des Sensors angepasst werden. Es ist darauf zu achten, dass die Zeitdauer für den zweiten Betriebsmodus an die Abklingkonstante der gedämpften Resonanzschwingung der schwingfähigen Einheit angepasst ist. Insbesondere bei stark dämpfen Medien muss aber gleichzeitig gewährleistet sein, dass die Zeitdauer ausreichend lang ist, um eine stabile Regelung und Messung der Phasenverschiebung zwischen Anregesignal $U_A$ und Empfangssignal $U_E$ zu gewährleisten. Grundsätzlich, aber insbesondere im Falle einer Anregung der schwingfähigen Einheit 4 mittels eines Rechtecksignals, ist es ferner von Vorteil, wenn jeweils der Zeitpunkt, zu welchem jeweils in Folge auf den zweiten Betriebsmodus 16 der erste Betriebsmodus 15 gestartet wird, auf die Schwingungen der schwingfähigen Einheit 4 angepasst wird, wenn also phasenrichtig zwischen den beiden Betriebsmodi 15,16 hin und her geschaltet wird. Dies kann beispielsweise durch eine Detektion der Nulldurchgänge (entspricht der Ruheposition) der Schwingungen der schwingfähigen Einheit 4 während des zweiten Betriebsmodus 16 erfolgen. Hierzu kann die Elektronikeinheit 6 beispielsweise eine Einheit zur Detektion der Amplitude der Schwingungen der schwingfähigen Einheit [hier nicht eingezeichnet] aufweisen. Eine solche Amplituden-Detektionseinheit kann beispielsweise als Bestandteil einer Amplitudenregeleinheit 9 wie in Fig. 2 gezeigt, oder als separate Einheit integriert werden.

**Bezugszeichenliste**

| | |
|---|---|
| 1 | Vibronischer Sensor |
| 2 | Medium |
| 3 | Behälter |
| 4 | Schwingfähige Einheit |
| 5 | Elektromechanische Wandlereinheit |
| 6 | Elektronikeinheit |
| 7 | adaptives Filter |
| 8 | Phasenregeleinheit, 8a Phasendetektion, 8b Regelung |
| 9 | Amplitudenregeleinheit |
| 10,10a | Analog-Digital Wandler, Digital-Analog-Wandler |
| 11 | Ausgangsstufe |
| 12 | Eingangsstufe |
| 13 | Antialiasing-Filter |
| 14 | Schaltelement |
| 15 | erster Betriebsmodus oder Anregesequenz |
| 16 | zweiter Betriebsmodus oder Mess-/Regelsequenz |
| 17 | Strom-Spannungs-Wandler |
| 18 | Spannungs-Strom-Wandler |
| $U_A$ | Anregesignal |
| $U_E$ | Empangssignal |
| $f_m$ | Mittenfrequenz des adaptiven Filters |
| $f_0$ | Resonanzfrequenz der schwingfähigen Einheit |
| $A_{soll}$ | Sollwert der Amplitude |
| $\Phi$ | Phase |
| $\Phi_{soll}$ | vorgebbare Phasenverschiebung zwischen Anregesignal und Empfangssignal |
| $\Phi_{filter}$ | Phasenverschiebung zwischen Eingangssignal und Ausgangssignal des adaptiven Filters |
| Q | Güte |
| B | Bandbreite |

**Patentansprüche**

1. Vibronischer Sensor (1) zur Bestimmung und/oder Überwachung zumindest einer Prozessgröße eines Mediums (2) in einem Behältnis (3) zumindest umfassend

- eine mechanisch schwingfähige Einheit (4),
- eine Antriebs-/Empfangseinheit (5) und
- eine Elektronikeinheit (6) mit zumindest einem adaptiven Filter (7),
wobei die Elektronikeinheit (6) dazu ausgestaltet ist, abwechselnd einen ersten (15) und einen zweiten (16) Betriebsmodus auszuführen,
wobei die Antriebs-/Empfangseinheit (5) dazu ausgestaltet ist, während des ersten Betriebsmodus (15) die mechanisch schwingfähige Einheit (4) mittels eines elektrischen Anregesignals ($U_A$) zu mechanischen Schwingungen anzuregen,
wobei die Elektronikeinheit (6) dazu ausgestaltet ist, während des zweiten Betriebsmodus (16)
- die Anregung der mechanisch schwingfähigen Einheit (4) mittels des Anregesignals ($U_A$) zu unterbrechen,
- die mechanischen Schwingungen der mechanisch schwingfähigen Einheit (4) zu empfangen und in ein elektrisches Empfangssignal ($U_E$) umzuwandeln
- zumindest einen Wert einer Filtercharakteristik des adaptiven Filters (7) derart einzustellen, dass eine vorgebbare Phasenverschiebung ($\Phi_{soll}$) zwischen dem Anregesignal ($U_A$) und dem Empfangssignal ($U_E$) vorliegt,
- das Empfangssignal ($U_E$) auszuwerten,
- aus dem Empfangssignal ($U_E$) die zumindest eine Prozessgröße zu bestimmen und
wobei die Filtercharakteristik des adaptiven Filters (7) während des ersten Betriebsmodus (15) konstant bleibt.

2. Vibronischer Sensor (1) nach Anspruch 1,

wobei es sich bei dem Anregesignal ($U_A$) um ein elektrisches Rechtecksignal handelt.

3. Vibronischer Sensor (1) nach Anspruch 1 oder 2, wobei die Elektronikeinheit (6) zumindest ein Schaltelement (14) zum Hin- und Herschalten zwischen dem ersten (15) und zweiten (16) Betriebsmodus umfasst.

4. Vibronischer Sensor (1) nach zumindest einem der vorhergehenden Ansprüche, wobei die Elektronikeinheit (6) dazu ausgestaltet ist, die vorgebbare Phasenverschiebung ($\Phi_{soll}$) durch Einstellung der Mittenfrequenz ($f_m$) des adaptiven Filters (7) einzustellen.

5. Vibronischer Sensor (1) nach zumindest einem der vorhergehenden Ansprüche, wobei die Elektronikeinheit (6) eine Phasenregeleinheit (8), insbesondere eine auf dem Prinzip eines Lock-In Verstärkers basierende Phasenregeleinheit (8), umfasst, welche die Mittenfrequenz ($f_m$) des adaptiven Filters (7) derart regelt, dass für die Phasenverschiebung ($\Phi_{filter}$) zwischen einem Eingangssignal und einem Ausgangssignal des Filters ein vorgebbarer Wert vorliegt, oder wobei die Elektronikeinheit (6) einen Ringspeicher und/oder einen Phasenschieber umfasst, mittels welchem die vorgebbare Phasenverschiebung ($\Phi_{soll}$) einstellbar ist.

6. Vibronischer Sensor (1) nach zumindest einem der vorhergehenden Ansprüche, wobei die Bandbreite (B) und/oder die Güte (Q) des adaptiven Filters (7) einstellbar ist/sind.

7. Vibronischer Sensor (1) nach zumindest einem der vorhergehenden Ansprüche, wobei es sich bei dem adaptiven Filter (7) um einen Resonatorfilter, oder um einen Bandpassfilter, insbesondere um einen Tiefpassfilter, insbesondere um einen Tiefpassfilter 2. Ordnung handelt.

8. Vibronischer Sensor (1) nach zumindest einem der vorhergehenden Ansprüche, wobei die vorgebbare Phasenverschiebung ($\Phi_{soll}$) im Wesentlichen zeitweise +/- 90°, +/-45° oder 0° beträgt.

9. Vibronischer Sensor (1) nach zumindest einem der vorhergehenden Ansprüche, wobei die Elektronikeinheit (6) eine Amplitudenregeleinheit (9) zur Regelung der Amplitude (A) des Anregesignals ($U_A$) auf einen vorgebbaren Wert ($A_{soll}$) oder auf einen Wert innerhalb eines vorgebbaren Intervalls umfasst.

10. Vibronischer Sensor (1) nach zumindest einem der vorhergehenden Ansprüche, wobei die Elektronikeinheit (6) dazu ausgestaltet ist, einen Frequenz-Suchlauf auszuführen, im Falle des Unterschreitens eines vorgebbaren Schwellwerts für die Amplitude (A) die schwingfähige Einheit (4) mittels des Frequenz-Suchlaufs anzuregen, und die Mittenfrequenz ($f_m$) des adaptiven Filters (7) sukzessive auf innerhalb eines vorgebbaren Frequenzintervalls aufeinander folgende diskrete Anregefrequenzen einzustellen.

11. Vibronischer Sensor (1) nach zumindest einem der vorhergehenden Ansprüche, wobei die Elektronikeinheit (6) dazu ausgestaltet ist, zumindest einen Wert und/oder Parameter zumindest einer der der Elektronikeinheit (6) zugeordneten Komponente (8a,8b,7,9), insbesondere einen Wert und/oder Parameter der Filtercharakteristik, der Phasenregeleinheit (8) oder der Amplitudenregeleinheit (9) während der Ausführung des ersten Betriebsmodus (15) zu speichern und/oder zu hinterlegen.

12. Vibronischer Sensor (1) nach Anspruch 11, wobei die Elektronikeinheit (6) dazu ausgestaltet ist, zu Beginn der Ausführung des zweiten Betriebsmodus (16) für die zumindest eine Komponente (8a,8b,7,9) den zumindest einen hinterlegten und/oder gespeicherten Parameter und/oder Wert einzustellen.

13. Vibronischer Sensor (1) nach zumindest einem der vorhergehenden Ansprüche, wobei es sich bei der Prozessgröße um einen vorgegebenen Füllstand, die Dichte und/oder die Viskosität des Mediums (2) in dem Behälter (3) handelt.

14. Vibronischer Sensor (1) nach zumindest einem der vorhergehenden Ansprüche, wobei die schwingfähige Einheit (4) eine Membran, ein Einstab oder eine Schwinggabel ist.

15. Vibronischer Sensor (1) nach zumindest einem der vorhergehenden Ansprüche, wobei es sich bei der Antriebs-/Empfangseinheit (5) um eine elektromagnetische oder um eine piezoelektrische, insbesondere eine ein einziges piezoelektrisches Element umfassende, Antriebs-/Empfangseinheit (5) handelt.

16. Verfahren zum Betreiben eines vibronischen Sensors (1) zur Bestimmung und/oder Überwachung zumindest einer Prozessgröße eines Mediums (2) in einem Behälter (3), insbesondere gemäß zumindest einem der vorhergehenden Ansprüche, wobei abwechselnd ein erster (15) und ein zweiter (16) Betriebsmodus ausgeführt werden, wobei während des ersten Betriebsmodus (15) die mechanisch schwingfähige Einheit (4) mittels eines elektrischen Anregesignals ($U_A$) zu mechanischen Schwingungen angeregt wird, wobei während des zweiten Betriebsmodus (16)

- die Anregung der mechanisch schwingfähigen Einheit (4) mittels des Anregesignals ($U_A$) unterbrochen wird,
- die mechanischen Schwingungen der mechanisch schwingfähigen Einheit (4) empfangen und in ein elektrisches Empfangssignal ($U_E$) umgewandelt werden
- zumindest ein Wert einer Filtercharakteristik des adaptiven Filters (7) derart eingestellt wird, dass eine vorgebbare Phasenverschiebung ($\Phi_{soll}$) zwischen dem Anregesignal ($U_A$) und dem Empfangssignal ($U_E$) vorliegt,
- das Empfangssignal ($U_E$) ausgewertet wird, aus dem Empfangssignal ($U_E$) die zumindest eine Prozessgröße bestimmt wird, und wobei die Filtercharakteristik des adaptiven Filters (7) während des ersten Betriebsmodus (15) konstant bleibt.

**Claims**

1. Vibronic sensor (1) designed to determine and/or monitor at least one process variable of a medium (2) in a vessel (3), comprising at least:

   - a unit capable of vibrating mechanically (4),
   - a drive/reception unit (5), and
   - an electronics unit (6) with at least an adaptive filter (7),

   wherein the electronics unit (6) is designed to alternately execute a first (15) and a second (16) operating mode,
   wherein the drive/reception unit (5) is designed to excite the unit capable of vibrating mechanically (4) to perform mechanical vibrations during the first operating mode (15) using an electrical excitation signal ($U_A$), wherein, during the second operating mode (16), the electronics unit (6) is designed to:

   - interrupt the excitation of the unit capable of vibrating mechanically (4) by means of the excitation signal ($U_A$),
   - receive the mechanical vibrations of the unit capable of vibrating mechanically (4) and to convert it to an electrical reception signal ($U_E$),
   - to set at least one value of a filter characteristic of the adaptive filter (7) in such a way that a predefinable phase shift ($\Phi_{soll}$) is present between the excitation signal ($U_A$) and the reception signal ($U_E$),
   - to evaluate the reception signal ($U_E$),

   - to determine the at least one process variable from the reception signal ($U_E$), and wherein the filter characteristic of the adaptive filter (7) remains constant during the first operating mode (15).

2. Vibronic sensor (1) as claimed in Claim 1, wherein the excitation signal ($U_A$) is an electrical square wave signal.

3. Vibronic sensor (1) as claimed in Claim 1 or 2, wherein the electronics unit (6) comprises at least a switching element (14) for switching back and forth between the first (15) and the second operating mode (16).

4. Vibronic sensor (1) as claimed in at least one of the previous claims, wherein the electronics unit (6) is designed to set the predefinable phase shift ($\Phi_{soll}$) by setting the center frequency ($f_m$) of the adaptive filter (7).

5. Vibronic sensor (1) as claimed in at least one of the previous claims, wherein the electronics unit (6) comprises a phase regulation unit (8), particularly a phase regulation unit (8) based on the principle of a lock-in amplifier, said unit regulating the center frequency ($f_m$) of the adaptive filter (7) in such a way that a predefinable value is present for the phase shift ($\Phi_{filter}$) between an input signal and an output signal of the filter, or wherein the electronics unit (6) comprises a ring memory and/or a phase shifter, with which the predefinable phase shift ($\Phi_{soll}$) can be regulated.

6. Vibronic sensor (1) as claimed in at least one of the previous claims, wherein the bandwidth (B) and/or the quality (Q) of the adaptive filter (7) can be regulated.

7. Vibronic sensor (1) as claimed in at least one of the previous claims, wherein the adaptive filter (7) is a resonator filter, or a band-pass filter, particularly a low-pass filter, particularly a low-pass filter of the second order.

8. Vibronic sensor (1) as claimed in at least one of the previous claims, wherein the predefinable phase shift ($\Phi_{soll}$) is essentially temporarily +/- 90°, +/-45° or 0°.

9. Vibronic sensor (1) as claimed in at least one of the previous claims, wherein the electronics unit (6) constitutes an amplitude regulation unit (9) designed to regulate the amplitude (A) of the excitation signal ($U_A$) to a predefinable value ($A_{soll}$) or to a value within a predefinable interval.

**10.** Vibronic sensor (1) as claimed in at least one of the previous claims, wherein the electronics unit (6) is designed to perform a frequency search, to excite the unit capable of vibrating (4) using the frequency search if a predefinable threshold value for the amplitude (A) is undershot, and to gradually set the center frequency ($f_m$) of the adaptive filter (7) to discrete consecutive excitation frequencies within a predefinable frequency interval.

**11.** Vibronic sensor (1) as claimed in at least one of the previous claims, wherein the electronics unit (6) is designed to save and/or store at least one value and/or parameter of at least one component assigned to the electronics unit (6), particularly a value and/or a parameter of the filter characteristic, of the phase regulation unit (8) or of the amplitude regulation unit (8) during the execution of the first operating mode (15).

**12.** Vibronic sensor (1) as claimed in Claim 11, wherein the electronics unit (6) is designed to set the at least one saved and/or stored parameter and/or value at the start of the execution of the second operating mode (16) for the at least one component (8a, 8b, 7, 9).

**13.** Vibronic sensor (1) as claimed in at least one of the previous claims, wherein the process variable is a predefined level, the density and/or the viscosity of the medium (2) in the vessel (3).

**14.** Vibronic sensor (1) as claimed in at least one of the previous claims, wherein the unit capable of vibrating (4) is a membrane, a single rod or a tuning fork.

**15.** Vibronic sensor (1) as claimed in at least one of the previous claims, wherein the drive/reception unit (5) is an electromagnetic or piezoelectric drive/reception unit (5), particularly a drive/reception unit (5) comprising a single piezoelectric element.

**16.** Procedure designed to operate a vibronic sensor (1) to determine and/or monitor at least one process variable of a medium (2) in a vessel (3), particularly as claimed in at least one of the previous claims, wherein a first operating mode (15) and a second (16) operating mode are executed alternately, wherein during the first operating mode (15), the unit capable of vibrating mechanically (4) is excited to perform mechanical vibrations using an electrical excitation signal ($U_A$), wherein during the second operating mode (16),

- the excitation of the unit capable of vibrating mechanically (4) by means of the excitation signal ($U_A$) is interrupted,
- the mechanical vibrations of the unit capable of vibrating mechanically (4) are received and converted to an electrical reception signal ($U_E$),
- at least one value of a filter characteristic of the adaptive filter (7) is set in such a way that a predefinable phase shift ($\Phi_{soll}$) is present between the excitation signal ($U_A$) and the reception signal ($U_E$),
- the reception signal ($U_E$) is evaluated,
- the at least one process variable is determined from the reception signal ($U_E$), and wherein the filter characteristic of the adaptive filter (7) remains constant during the first operating mode (15).

**Revendications**

**1.** Capteur vibronique (1) destiné à la détermination et/ou à la surveillance d'au moins une grandeur process d'un produit (2) dans un réservoir (3), comprenant au minimum :

- une unité apte à vibrer mécaniquement (4),
- une unité d'entraînement / de réception (5), et
- une unité électronique (6) avec au moins un filtre adaptatif (7),

pour lequel l'unité électronique (6) est conçue de telle sorte à exécuter à tour de rôle un premier (15) et un deuxième (16) mode de fonctionnement,

l'unité d'entraînement / de réception (5) étant conçue de telle sorte à exciter, pendant le premier mode de fonctionnement (15), l'unité apte à vibrer mécaniquement (4) en vibrations mécaniques au moyen d'un signal d'excitation électrique ($U_A$),

l'unité électronique (6) étant conçue, pendant le deuxième mode de fonctionnement (16), de telle sorte

- à interrompre l'excitation de l'unité apte à vibrer mécaniquement (4) au moyen du signal d'excitation ($U_A$),
- à recevoir les vibrations mécaniques de l'unité apte à vibrer mécaniquement (4) et à les convertir en un signal de réception électrique ($U_E$),
- à régler au moins une valeur d'une caractéristique du filtre adaptatif (7) de telle manière à obtenir un décalage de phase ($\Phi_{soll}$) entre le signal d'excitation ($U_A$) et le signal de réception ($U_E$),
- à évaluer le signal de réception ($U_E$),
- à déterminer au moins une grandeur process à partir du signal de réception (UE), et la caractéristique du filtre adaptatif (7) restant constante pendant le premier mode de fonctionnement (15).

2. Capteur vibronique (1) selon la revendication 1, pour lequel il s'agit, concernant le signal d'excitation ($U_A$), d'un signal rectangulaire électrique.

3. Capteur vibronique (1) selon la revendication 1 ou 2, pour lequel l'unité électronique (6) comprend au moins un élément de commutation (14) destiné à la commutation entre le premier (15) et le deuxième mode de fonctionnement (16), et inversement.

4. Capteur vibronique (1) selon au moins l'une des revendications précédentes, pour lequel l'unité électronique (6) est conçue de telle sorte à régler le décalage de phase prédéfinissable ($\Phi_{soll}$) par le réglage de la fréquence centrale ($f_m$) du filtre adaptatif (7).

5. Capteur vibronique (1) selon au moins l'une des revendications précédentes, pour lequel l'unité électronique (6) comprend une unité de régulation de phase (8), notamment une unité de régulation de phase (8) basée sur le principe d'un amplificateur synchrone, laquelle unité de régulation régule la fréquence centrale ($f_m$) du filtre adaptatif (7) de telle sorte à obtenir une valeur prédéfinissable pour le décalage de phase ($\Phi_{filter}$) entre un signal d'entrée et un signal de sortie du filtre, ou pour lequel l'unité électronique (6) comprend une mémoire annulaire et/ou un déphaseur, au moyen duquel le décalage de phase prédéfinissable ($\Phi_{soll}$) est réglable.

6. Capteur vibronique (1) selon au moins l'une des revendications précédentes, pour lequel la largeur de bande (B) et/ou la qualité (Q) du filtre adaptatif (7) est/sont réglable(s).

7. Capteur vibronique (1) selon au moins l'une des revendications précédentes, pour lequel il s'agit, concernant le filtre adaptatif (7), d'un filtre à résonateur, ou d'un filtre passe-bande, notamment un filtre passe-bas, notamment un filtre passe-bas de 2ème ordre.

8. Capteur vibronique (1) selon au moins l'une des revendications précédentes, pour lequel le décalage de phase prédéfinissable ($\Phi_{soll}$) est pour l'essentiel temporairement de +/- 90°, +/- 45° ou 0°.

9. Capteur vibronique (1) selon au moins l'une des revendications précédentes, pour lequel l'unité électronique (6) est une unité de régulation d'amplitude (9) destinée à la régulation de l'amplitude (A) du signal d'excitation ($U_A$) à une

valeur prédéfinissable ($A_{soll}$) ou à une valeur au sein d'un intervalle prédéfinissable.

10. Capteur vibronique (1) selon au moins l'une des revendications précédentes, pour lequel l'unité électronique (6) est conçue de telle sorte à exécuter un balayage de fréquence, à exciter l'unité apte à vibrer (4) au moyen du balayage de fréquence en cas de passage sous une valeur seuil prédéfinissable de l'amplitude (A), et à régler la fréquence centrale ($f_m$) du filtre adaptatif (7) successivement à des fréquences d'excitation discrètes consécutives au sein d'un intervalle de fréquence prédéfinissable.

11. Capteur vibronique (1) selon au moins l'une des revendications précédentes, pour lequel l'unité électronique (6) est conçue de telle sorte à mémoriser et/ou à stocker au moins une valeur et/ou un paramètre d'au moins un composant attribué à l'unité électronique (6), notamment une valeur et/ou un paramètre de la caractéristique de filtre, de l'unité de régulation de phase (8) ou de l'unité de régulation d'amplitude (8) pendant l'exécution du premier mode de fonctionnement (15).

12. Capteur vibronique (1) selon la revendication 11, pour lequel l'unité électronique (6) est conçue de telle sorte à régler, au début de l'exécution du deuxième mode de fonctionnement (16) pour l'au moins un composant (8a, 8b, 7, 9), l'au moins un paramètre et/ou valeur stocké(es) et/ou mémorisé(es).

13. Capteur vibronique (1) selon au moins l'une des revendications précédentes, pour lequel il s'agit, concernant la grandeur process, d'un niveau prédéfini, de la densité et/ou de la viscosité du produit (2) dans le réservoir (3).

14. Capteur vibronique (1) selon au moins l'une des revendications précédentes, pour lequel l'unité apte à vibrer (4) est une membrane, une monotige ou une fourche vibrante.

15. Capteur vibronique (1) selon au moins l'une des revendications précédentes, pour lequel il s'agit, concernant l'unité d'entraînement / de réception (5), d'une unité d'entraînement / de réception (5) électromécanique ou piézoélectrique, notamment comprenant un élément piézoélectrique.

16. Procédé destiné à l'exploitation d'un capteur vibronique (1) en vue de la détermination et/ou de la surveillance d'au moins une grandeur process d'un produit (2) dans un réservoir (3), notamment selon l'une des revendications précédentes, pour lequel un premier (15) et un deuxième (16) mode de fonctionnement sont exécutés à tour de rôle, pendant le premier mode de fonctionnement (15), l'unité apte à vibrer mécaniquement (4) étant excitée en vibrations mécaniques au moyen d'un signal d'excitation électrique ($U_A$),

pendant le deuxième mode de fonctionnement (16),

- l'excitation de l'unité apte à vibrer mécaniquement (4) au moyen du signal d'excitation ($U_A$) étant interrompue,
- les vibrations mécaniques de l'unité apte à vibrer mécaniquement (4) étant reçues et converties en un signal de réception électrique ($U_E$),
- au moins une valeur d'une caractéristique du filtre adaptatif (7) étant réglée de telle sorte à obtenir un décalage de phase ($\Phi_{soll}$) entre le signal d'excitation ($U_A$) et le signal de réception ($U_E$),
- le signal de réception ($U_E$) étant évalué,
- au moins une grandeur process étant déterminée à partir du signal de réception ($U_E$), et la caractéristique du filtre adaptatif (7) restant constante pendant le premier mode de fonctionnement (15).

Fig. 1

Fig. 2

Fig. 3a

Fig. 3b

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006034105 A1
- DE 102007013557 A1
- DE 102005015547 A1
- DE 102009026685 A1
- DE 102009028022 A1
- DE 102010030982 A1
- DE 00102010030982 A1
- US 20050210954 A1

- DE 102014118393 A1
- DE 102012101667 A1
- DE 102014119061 A1
- DE 102007008669 A1
- EP 2151672 A1
- DE 10056353 A1
- DE 10161071 A1
- DE 10161072 A1